Europäisches Patentamt

European Patent Office

Office européen des brevets

(19)

(11) Numéro de publication : **0 435 761 B1**

(12) **FASCICULE DE BREVET EUROPEEN**

(45) Date de publication du fascicule du brevet :
30.03.94 Bulletin 94/13

(51) Int. Cl.[5] : **C23F 13/00, G01N 17/02**

(21) Numéro de dépôt : **90403730.6**

(22) Date de dépôt : **21.12.90**

(54) **Procédé et dispositif de détermination des interactions dues à des courants continus sur des structures métalliques enterrées voisines.**

(30) Priorité : **27.12.89 FR 8917281**

(43) Date de publication de la demande :
**03.07.91 Bulletin 91/27**

(45) Mention de la délivrance du brevet :
**30.03.94 Bulletin 94/13**

(84) Etats contractants désignés :
**AT BE CH DE DK ES FR GB GR IT LI LU NL SE**

(56) Documents cités :
**FR-A- 2 356 741**
**US-A- 4 591 792**

(56) Documents cités :
**MATERIALS PERFORMANCE, vol. 22, no. 8, août 1983, HOUSTON, US, pages 12 - 20; J. POLAK: "The use of multipurpose measuring probes to assess the adequacy of cathodic protection of buried pipelines"**
**MATERIALS PERFORMANCE, vol. 20, no. 2, février 1981, HOUSTON, US, pages 19 - 24; R.L. SEIFERT: "The calculation of true cathodic protection interference drain current from easily measured field data"**

(73) Titulaire : **GAZ DE FRANCE (SERVICE NATIONAL)**
**23 rue Philibert-Delorme**
**F-75017 Paris (FR)**

(72) Inventeur : **Blanchard, Michel**
**29, rue de Perrières, Pronleroy**
**F-60190 Estrees Saint-Denis (FR)**

(74) Mandataire : **Thévenet, Jean-Bruno et al**
**Cabinet Beau de Loménie 158, rue de l'Université**
**F-75340 Paris Cédex 07 (FR)**

EP 0 435 761 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé et un dispositif de détermination des interactions dues à des courants continus sur des première et deuxième structures métalliques enterrées voisines, dont l'une au moins est reliée à un générateur de courant continu, tel qu'un dispositif de protection cathodique.

Il est bien connu que le courant continu produit par un générateur dont un pôle est mis à la terre se propage à travers le sol et peut provoquer des modifications de l'état électrique d'ouvrages enterrés pouvant conduire à une dégradation de ces ouvrages par électrolyse. Ainsi, une structure enterrée reliée à un générateur de courant continu produisant un courant électrique stable, par exemple un dispositif de protection cathodique classique, ou encore une voie électrifiée à courant continu produisant des courants vagabonds, donnent lieu à des interactions avec des structures métalliques enterrées voisines, c'est-à-dire conduisent à des modifications du potentiel des structures métalliques mesuré par rapport au milieu dans lequel sont placées les structures, par suite de variations d'échanges de courants passant du milieu ambiant dans les structures ou des structures dans le milieu ambiant. Selon l'importance de la surface métallique dénudée d'une structure en contact avec le milieu ambiant, la densité de courant est plus ou moins grande. Les effets d'une interaction de courant sur une structure donnée sont d'autant plus grands que la densité du courant concerné est elle-même plus grande.

Les interactions dues à des circulations de courant continu dans le sol peuvent conduire à des influences néfastes d'une structure enterrée sur une structure enterrée voisine. Afin de mettre en évidence de telles interactions on a déjà proposé de contrôler le potentiel de chacune des structures, qui peuvent être par exemple des canalisations enterrées, à l'aide de voltmètres à forte résistance interne ou d'enregistreurs de tension et d'électrodes impolarisables placées dans le sol au voisinage des structures. Pour la conduite des mesures, un voltmètre ou un enregistreur de tension est branché entre chacune des structures et l'électrode de référence correspondante, et plusieurs mesures sont effectuées, les installations à courant continu étant mises successivement en service et hors service. Les procédés et dispositifs connus de détermination des interactions dues à des courants continus se fondent essentiellement sur des mesures de variation du potentiel du métal d'une structure enterrée, par rapport au milieu dans lequel est placée la structure. En pratique, il s'avère toutefois difficile d'interpréter les mesures concernant les influences entre ouvrages voisins situés dans un même milieu ambiant et il est même parfois pratiquement impossible de déterminer quel est l'ouvrage l'influençant et quel est l'ouvrage influencé.

Les erreurs d'interprétation sont dues principalement aux trois facteurs suivants :

1. La mesure du potentiel conduite/sol qui prend en compte la chute de tension dans le milieu, créée par la circulation du courant.

2. La résistivité du milieu qui détermine en partie les qualités chimiques de l'électrolyse.

3. Les revêtements des structures qui les isolent plus ou moins du milieu.

Même si la méthodologie, actuellement reconnue, ne prêtait pas à des erreurs d'interprétation, elle conduirait néanmoins, à prendre des dispositions curatives mais en aucun cas préventives suite à des blessures ultérieures accidentelles du revêtement (ou à l'apparition de microfissures par le vieillissement).

La présente invention vise à remédier aux inconvénients précités et à permettre de contrôler de façon fiable les interactions dues à des courants continus sur des structures métalliques enterrées voisines.

De façon plus particulière, la présente invention vise à permettre de vérifier la qualité d'une protection cathodique préventive et d'apprécier les influences éventuelles d'ouvrages voisins, mais aussi de vérifier les influences de courants vagabonds.

L'invention a encore pour but de fournir un procédé et un dispositif de détermination d'interactions qui soient précis, fiables, aisés à mettre en oeuvre et permettent une bonne qualité de diagnostic.

Ces buts sont atteints grâce à un dispositif de détermination des interactions dues à des courants continus sur des première et deuxième structures métalliques enterrées voisines, dont l'une au moins est reliée à un générateur de courant continu, tel qu'un dispositif de protection cathodique, caractérisé en ce qu'il comprend :

a) des première et deuxième éprouvettes témoins calibrées métalliques réalisées en des matériaux analogues à ceux dans lesquels sont réalisées respectivement les première et deuxième structures, lesdites première et deuxième éprouvettes témoins étant placées en contact avec le sol approximativement au-dessus respectivement desdites première et deuxième structures enterrées de telle manière que la distance $l'$ entre les première et deuxième éprouvettes témoins soit sensiblement identique à la distance $l$ entre lesdites première et deuxième structures,

b) des première et deuxième électrodes de référence disposées à proximité immédiate respectivement desdites première et deuxième éprouvettes témoins,

c) des première et deuxième prises de potentiel isolées par rapport au sol et reliées respectivement auxdites première et deuxième structures métalliques,

2

d) un premier interrupteur simple connecté entre la première prise de potentiel isolée et un premier dispositif de mesure de courant lui-même relié à la première éprouvette témoin, et un deuxième interrupteur simple connecté entre la deuxième prise de potentiel isolée et un deuxième dispositif de mesure de courant lui-même relié à la deuxième éprouvette témoin,

e) un premier inverseur simple pour connecter une borne d'un premier dispositif de mesure de tension, dont l'autre borne est connectée à la première électrode de référence, sélectivement soit à ladite première prise de potentiel, soit à ladite première éprouvette témoin et un deuxième inverseur simple pour connecter une borne d'un deuxième dispositif de mesure de tension, dont l'autre borne est connectée à la deuxième électrode de référence, sélectivement soit à ladite deuxième prise de potentiel, soit à ladite deuxième éprouvette témoin.

La distance d entre chacune des première et deuxième structures enterrées et l'éprouvette témoin correspondante est très inférieure aux distances entre les sources de courant continu et les structures enterrées.

Ainsi, l'invention repose sur la constatation que la modification du potentiel d'un ouvrage influencé ne peut pas être prise comme seul critère de détermination d'une interaction dans le cas d'une électrode de référence plus ou moins éloignée ou isolée localement par le revêtement du métal à mesurer. Selon la présente invention on prend ainsi en compte à la fois et simultanément les potentiels des ouvrages dans le sol et la densité du courant circulant dans les éprouvettes métalliques témoins calibrées placées de façon prédéterminée par rapport aux structures enterrées.

De façon avantageuse, le dispositif selon l'invention présente un fonctionnement automatisé et dans ce cas peut comprendre en outre un échantillonneur-bloqueur comportant quatre voies différentielles isolées pour effectuer une mesure simultanée à l'aide desdits premier et deuxième dispositifs de mesure de courant et à l'aide desdits premier et deuxième dispositifs de mesure de tension, un premier multiplexeur placé en sortie dudit échantillonneur-bloqueur pour ne laisser passer qu'un seul signal différentiel à la fois, en isolant complètement les signaux des autres voies, un amplificateur en tension pour recevoir les signaux issus des voies différentielles de mesure de tension, un amplificateur en courant pour recevoir les signaux issus des voies différentielles de mesure de courant, un second multiplexeur pour sélectionner une voie de mesure de tension comprenant l'amplificateur en tension ou une voie de mesure en courant comprenant l'amplificateur en courant, un filtre passe-bas connecté en sortie du second multiplexeur, un convertisseur analogique-numérique connecté en sortie du filtre passe-bas, un micro-processeur associé à une mémoire de programme et une mémoire de travail pour le stockage de données, ainsi qu'à un dispositif de contrôle et de séquencement des mesures, à une horloge temps réel et à un décodeur d'entrées-sorties.

L'échantillonneur-bloqueur peut comprendre un relais à au moins huit contacts de travail et au moins quatre condensateurs de sortie pour mémoriser les valeurs de tension différentielle appliquées sur les quatre voies de mesure.

L'invention concerne également un capteur pour dispositif de détermination des interactions dues à des courants continus sur des structures métalliques enterrées voisines dont l'une au moins est reliée à un générateur de courant continu, tel qu'un dispositif de protection cathodique, caractérisé en ce qu'il comprend un support en forme de plaque destiné à être placé sur le sol au voisinage d'une structure enterrée, une éprouvette témoin comprenant une tige métallique verticale présentant une extrémité libre inférieure en forme de pointe et un corps qui entoure une partie supérieure de la tige et est engagée dans une première ouverture du support en forme de plaque, une électrode de référence introduite de façon inclinée dans une deuxième ouverture du support en formant un angle compris entre environ 20 et 50° par rapport à la verticale, de façon à présenter une extrémité inférieure engagée dans le sol, qui émerge sous la plaque de support au voisinage de la tige verticale de l'éprouvette témoin, et des moyens de connexion pour connecter les extrémités supérieures de l'éprouvette témoin et de l'électrode de référence à un dispositif extérieur de mesure de tension ou d'intensité de courant.

La tige métallique peut être engagée par son extrémité libre supérieure dans une tête métallique qui forme tête de piquet et comprend des moyens de connexion électrique. Le corps en forme de manchon et le support en forme de plaque peuvent être réalisés en une matière plastique telle que du PVC.

L'invention a encore pour objet un procédé de détermination des interactions dues à des courants continus sur des première et deuxième structures métalliques enterrées voisines dont l'une au moins est reliée à un générateur de courant continu tel qu'un dispositif de protection cathodique, caractérisé en ce qu'il consiste à placer au voisinage des première et deuxième structures métalliques enterrées des première et deuxième éprouvettes métalliques témoins calibrées réalisées en des matériaux analogues à ceux des première et deuxième structures, les première et deuxième éprouvettes étant écartées l'une de l'autre d'une distance l' égale à la distance l séparant les première et deuxième structures, à placer à proximité immédiate des première et deuxième éprouvettes métalliques témoins des première et deuxième électrodes de référence et à mesurer simultanément d'une part les potentiels des première et deuxième éprouvettes

EP 0 435 761 B1

témoins par rapport aux première et deuxième électrodes de référence et d'autre part les intensités des courants parcourant les première et deuxième éprouvettes témoins calibrées lorsque celles-ci sont reliées électriquement respectivement aux première et deuxième structures.

On procède aux mesures des potentiels et des intensités des première et deuxième éprouvettes témoins successivement dans les conditions suivantes:

a) tous les générateurs de courant continu associés aux première et deuxième structures sont en service,

b) seuls les générateurs de courant continu associés à la première structure sont en service,

c) seuls les générateurs de courant continu associés le cas échéant à la deuxième structure sont en service.

Le procédé peut en outre comprendre une étape consistant à effectuer des mesures instantanées et simultanées des potentiels des première et deuxième structures enterrées et des intensités des courants parcourant les première et deuxième éprouvettes témoins raccordées, sans être polarisées, respectivement auxdites première et deuxième structures pendant une durée inférieure ou égale à environ trois secondes.

Le procédé peut encore comprendre en outre une étape consistant à à effectuer des mesures instantanées et simultanées des potentiels des première et deuxième structures enterrées et des intensités des courants parcourant les première et deuxième éprouvettes témoins au moins trente minutes après un raccordement électrique ininterrompu des première et deuxième éprouvettes témoins respectivement aux première et deuxième structures.

Le procédé peut également inclure en outre une étape consistant à mesurer les potentiels des première et deuxième structures enterrées par rapport respectivement aux première et deuxième électrodes de référence, les première et deuxième éprouvettes témoins étant déconnectées et tous les générateurs de courant continu associés aux première et deuxième structures étant en service.

Selon une variante de réalisation, le procédé comprend en outre une étape consistant à mesurer les potentiels naturels des première et deuxième éprouvettes témoins par rapport respectivement aux première et deuxième électrodes de référence non reliées électriquement aux première et deuxième structures au moins quinze minutes après la mise en place des première et deuxième éprouvettes témoins.

D'autres caractéristiques et avantages de l'invention ressortiront de la description suivante de modes particuliers de réalisation donnés à titre d'exemples, en référence aux dessins annexés, sur lesquels:

- la figure 1 est une vue schématique en coupe verticale montrant l'ensemble d'un dispositif de mesure d'influence selon l'invention,
- la figure 2 est un schéma-bloc montrant les différents éléments constitutifs des circuits électroniques incorporés dans un dispositif automatisé de mesure d'influences selon l'invention,
- la figure 3 est une vue en coupe verticale d'un capteur composé d'une éprouvette témoin calibrée et d'une électrode de référence, pouvant être utilisé dans le cadre du dispositif de mesure d'influences selon les figures 1 et 2,
- la figure 4 est une vue éclatée en élévation de l'électrode de référence mise en oeuvre dans le capteur de la figure 3,
- la figure 5 est une vue de dessus d'un support commun pour le capteur de la figure 3, et
- les figures 6 à 9 sont des diagrammes vectoriels montrant les influences dues au courant continu exercées entre deux structures selon quatre cas d'interactions différentes.

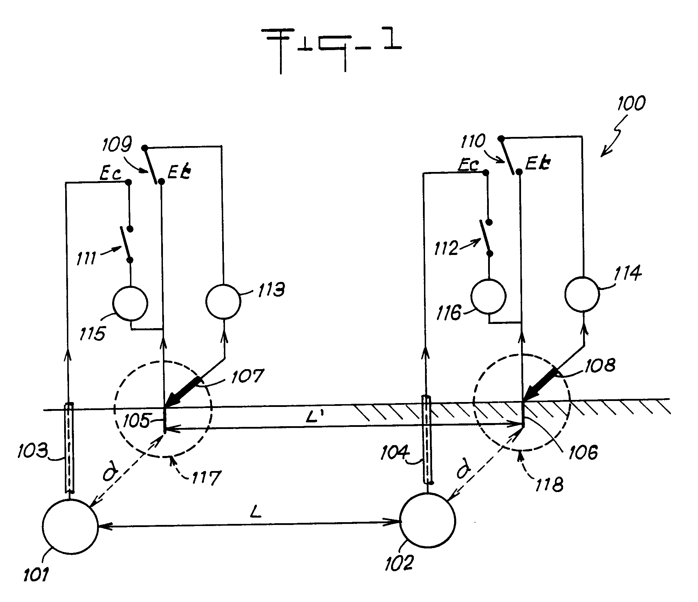

Si l'on se réfère à la figure 1, on voit deux structures métalliques enterrées 101, 102, telles que des canalisations pouvant servir par exemple au transport d'eau, de gaz ou d'hydrocarbures, ou encore de conduits de protection pour des câbles électriques. Les deux structures 101, 102 sont éloignées l'une de l'autre d'une distance $l$ et sont munies chacune d'une prise de potentiel 103, 104, c'est-à-dire d'une liaison électrique parfaitement isolée par rapport au sol, qui relie la structure enterrée 101 resp. 102 et un point de mesure de potentiel situé hors du sol.

Conformément à l'invention, on utilise deux éprouvettes témoins calibrées 105, 106 réalisées dans le même métal ou alliage métallique que les ouvrages enterrés 101, 102 dont les interactions sont à déterminer (par exemple acier, fonte, cuivre, plomb). Les éprouvettes témoins 105, 106 se présentent sous la forme de piquets calibrés placés au droit des conduites 101, 102 avec un écartement $l'$ qui correspond à la distance $l$ entre les conduites 101, 102 à l'endroit des mesures. Les éprouvettes témoins calibrées 105, 106 présentent une surface de contact avec le sol qui peut avantageusement être de l'ordre de 100 cm$^2$.

Les éprouvettes témoins 105, 106 sont ainsi disposées au voisinage de la surface du sol, et peuvent être mises en place très facilement de façon temporaire au moment des mesures à proximité des prises de potentiel 103, 104 qui sont en général installées lors de la mise en place des canalisations 101, 102. Les éprouvettes témoins 105, 106 peuvent ne pas être rigoureusement superposées aux structures enterrées 101, 102 et peuvent être légèrement décalées par rapport à celles-ci, si la nature du sous-sol est relativement homogène. Toutefois, il convient que la distance $d$ entre chacune des structures enterrées 101, 102 et l'éprouvette témoin

4

EP 0 435 761 B1

correspondante 105, 106 reste très inférieure aux distances entre les sources de courant continu, telles que des dispositifs de protection cathodique non représentés, et les structures enterrées 101, 102.

Des électrodes de référence 107, 108 sont installées au voisinage de la surface du sol au plus près des éprouvettes témoins 105, 106, afin de limiter au maximum la chute de tension dans le sol lors des mesures de tension effectuées entre les éprouvettes témoins 105, 106 et les électrodes de référence 107, 108.

Les électrodes de référence 107, 108 sont amovibles comme les éprouvettes témoin et peuvent être mises en place à l'occasion des mesures. Chaque électrode de référence constitue une demi-pile impolarisable. Les électrodes de référence peuvent être par exemple constituées par des électrodes au cuivre-sulfate de cuivre (électrodes $Cu/CuSO_4$). Avantageusement, les électrodes de référence 107, 108 présentent un faible diamètre, de préférence inférieur ou égal à environ 20 mm.

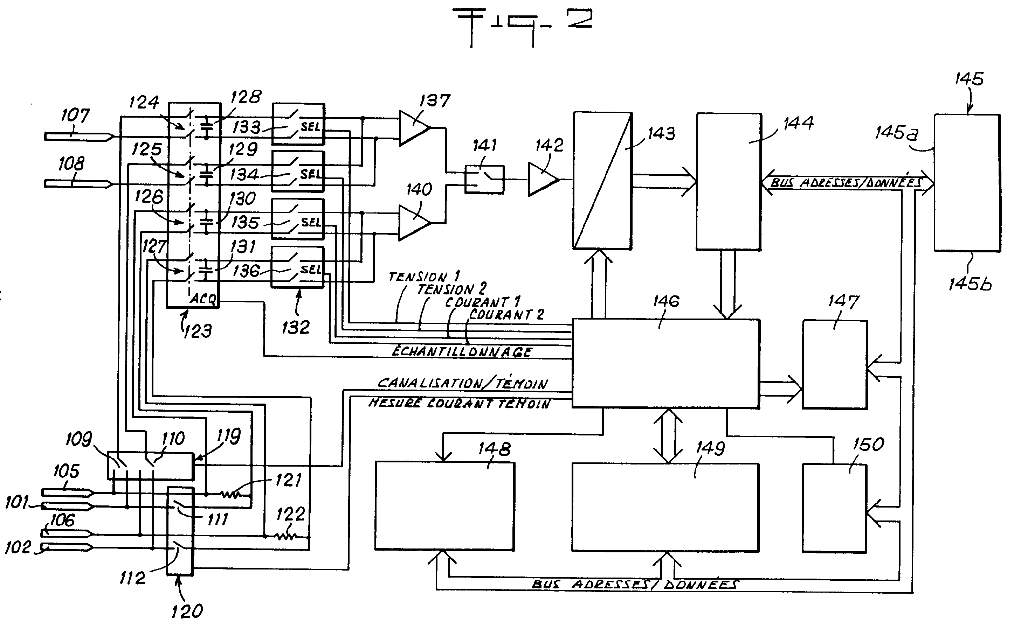

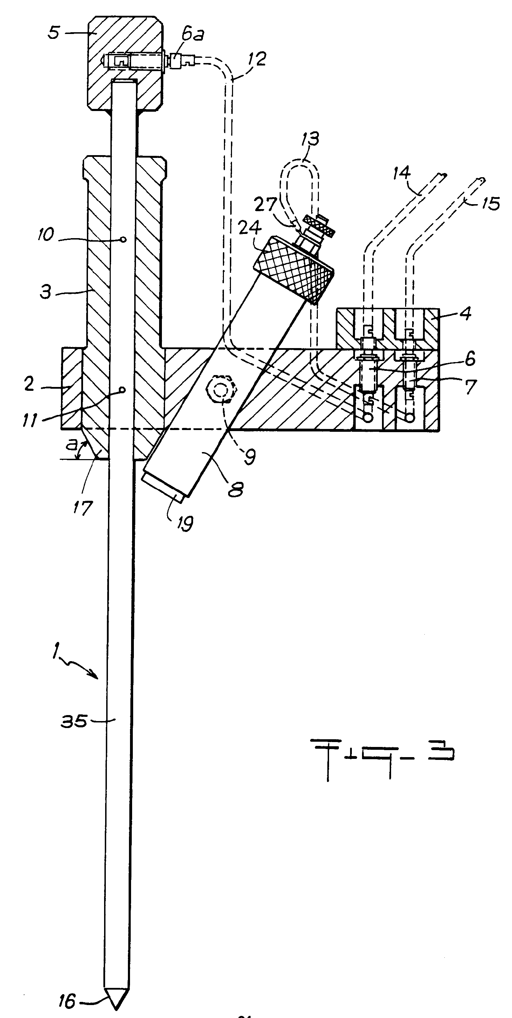

L'ensemble formé d'une éprouvette témoin calibrée 105 resp. 106 et d'une électrode de référence 107 resp. 108 peut constituer un capteur unique 117 resp. 118 comprenant un support unique 2 comme cela sera décrit plus loin de façon plus détaillée en référence aux figures 3 à 5. Ainsi, chaque capteur 117, 118 peut comprendre une éprouvette témoin 105, 106 comportant une tige ancrée sensiblement verticalement dans le sol à partir de la surface du sol, et une électrode de référence 107, 108 inclinée d'un angle compris entre environ 20° et 50° par rapport à la verticale en présentant une extrémité inférieure située au voisinage de la surface du sol à proximité immédiate de la tige ancrée dans le sol, l'éprouvette témoin et l'électrode de référence étant solidarisées par un support commun 2.

Le dispositif de mesure associé aux canalisations 101, 102, aux éprouvettes témoins 105, 106 et aux électrodes de référence 107, 108 comprend deux interrupteurs simples 111, 112, deux inverseurs simples 109, 110, deux appareils de mesure de tension 113, 114 tels que des millivoltmètres à résistance interne élevée supérieure à environ un mégohm par volt, et deux appareils de mesure d'intensité de courant 115, 116 tels que des milliampèremètres avec chute de tension inférieure à environ 30 mV pour des gammes de mesure comprises entre par exemple 50 micro-ampères et 100 milli-ampères.

Comme on peut le voir sur la figure 1, le premier interrupteur simple 111 permet une liaison sélective entre la prise de potentiel 103 de la première canalisation 101 et une première borne du milliampéremètre 115 dont l'autre borne est reliée à la première éprouvette témoin 105. De même le second interrupteur 112 assure une liaison sélective entre la prise de potentiel 104 de la deuxième canalisation 102 et une première borne du milliampéremètre 116 dont l'autre borne est reliée à la seconde éprouvette témoin 106.

Le premier inverseur 109 permet de connecter une borne du millivoltmètre 113, dont l'autre borne est connectée à l'électrode de référence 107, sélectivement soit à la prise de potentiel 103 (commutateur mobile en positiion Ec) soit à l'éprouvette témoin 105 (commutateur mobile en position Et).

De même, le second inverseur 110 permet de connecter une borne du millivoltmètre 114, dont l'autre borne est connectée à l'électrode de référence 108, sélectivement soit à la prise de potentiel 104 (commutateur mobile en position Ec) soit à l'éprouvette témoin 106 (commutateur mobile en position Et).

Le dispositif représenté schématiquement sur la figure 1 permet d'effectuer toute une série de mesures diverses en fonction de la position des inverseurs 109, 110 et des interrupteurs 111, 112.

Dans une première étape, il est possible de procéder à des mesures des potentiels des conduites 101 et 102 qui peuvent être assimilées à des mesures traditionnelles, les protections cathodiques ou autres sources de courant continu associées aux conduites 101, 102 étant en service. Pour cela, il suffit que les inverseurs 109 et 110 soient dans la position Ec et que les interrupteurs 111 et 112 soient ouverts.

Dans une seconde étape, il est possible de procéder à des mesures des potentiels des éprouvettes témoins 105 et 106. Ces mesures doivent être effectuées après un temps de stabilisation, qui peut être de l'ordre de quinze minutes, après la mise en place des témoins. Pour effectuer ces mesures, il suffit que les inverseurs 109 et 110 soient en position Et et que les interrupteurs 111 et 112 soient ouverts.

Les mesures effectuées au cours des deux premières étapes précédentes donnent l'état initial des ouvrages 101, 102, avant toute recherche d'influence.

Des mesures complémentaires permettent de simuler des défauts de revêtement sur les structures 101, 102, ces défauts étant calibrés selon un calibre (par exemple 100 cm²) qui correspond à la surface des éprouvettes témoins 105, 106 qui sont en contact avec le sol.

Les mesures complémentaires de simulation de défauts de revêtement, qui mettent en oeuvre les éprouvettes témoins 105, 106 peuvent être réalisés de deux manières différentes.

Dans un premier temps, on procède à des mesures instantanées et simultanées des potentiels des conduites 101, 102 et de l'intensité du courant parcourant les éprouvettes témoins 105, 106 raccordées aux structures 101, 102, mais non polarisées. Pour cela, les inverseurs 109 et 110 sont en position Ec et les interrupteurs 111 et 112 sont fermés pour un temps inférieur à environ trois secondes.

Dans un deuxième temps, on procède à des mesures simultanées des potentiels des conduites 101, 102 et des intensités du courant dans les éprouvettes témoins 105, 106 raccordées en permanence aux structures 101, 102. Pour cela, les inverseurs 109 et 110 sont maintenus en position Ec et les interrupteurs 111, 112 sont fermés. Les mesures sont effectuées par exemple au moins trente minutes après cette fermeture.

Enfin, pour réaliser des mesures d'interaction proprement dites, on procède à des mesures simultanées des potentiels des éprouvettes témoins 105, 106 et de l'intensité des courants parcourant ces éprouvettes témoins 105, 106 reliées en permanence aux structures 101, 102 respectivement. Pour cela, les inverseurs 109, 110 sont mis en position Et et les interrupteurs 111, 112 sont maintenus fermés.

Les potentiels et les intensités du courant de polarisation dans les éprouvettes témoins 105, 106 sont mesurés successivement dans les conditions suivantes:

a) tous les générateurs de courant continu associés aux structures 101, 102 sont en service,

b) seuls le ou les générateurs de courant continu associés à la première structure 101 sont en service,

c) seuls le ou les générateurs de courant continu associés le cas échéant à la deuxième structure 102 sont en service.

La mise hors service des générateurs de courant continu, tels que des dispositifs de protection cathodique, se fait successivement sur les structures 101 et 102 à l'aide d'interrupteurs cycliques, et pour des durées inférieures à environ trois secondes. Afin d'éviter la dépolarisation des éprouvettes témoins 105, 106, les temps de coupure ne sont jamais supérieurs à une valeur de l'ordre du vingtième du temps de mise en service du générateur de courant continu.

Les différentes mesures effectuées à l'aide du dispositif selon l'invention peuvent être regroupées dans des tableaux tels que les tableaux I et II annexés à la fin de la description. Le tableau I récapitule les mesures de l'état initial des ouvrages 101, 102, les protections cathodiques ou autres sources de courant continu associés à ces ouvrages étant en service tandis que le tableau II récapitule les mesures d'interaction proprement dites qui impliquent des mises en service sélectives des protections cathodiques ou autres sources de courant continu associées aux ouvrages.

L'analyse des mesures indiquées dans le tableau I (état initial des ouvrages considérés) donne pour chaque conduite 101, 102, si l'on considère que chaque éprouvette témoin présente une surface de 100 cm$^2$.

1) Les potentiels de la conduite par rapport au sol selon la méthode habituelle de contrôle.

2) Les potentiels spontanés pris par des témoins 105, 106 de 100 cm$^2$ dans le milieu de résistivité spécifique à l'endroit des mesures.

3) Les potentiels de la conduite par rapport au sol instantanés avec les témoins 105, 106 raccordés aux conduites 101, 102, ce qui simule des chutes de potentiel créé par des défauts de 100 cm$^2$.

4) Les intensités instantanées prises par des défauts de 100 cm$^2$ avant polarisation (estimation de la densité du courant de protection de chaque ouvrage).

5) Les potentiels de la conduite par rapport au sol avec les témoins 105, 106 raccordés en permanence.

6) Les intensités du courant de protection dans les témoins 105, 106 après polarisation.

Cette série de mesures sert de référence pour une meilleure interprétation des mesures d'interaction proprement dites.

Les résultats obtenus dans le tableau II (mesures d'interaction) peuvent conduire à trois situations :

1) Protection cathodique des ouvrages 101 et 102 en service :

si l'on constate une inversion du sens du courant dans un témoin 105 ou 106, une sortie de courant, donc perte de métal sur l'un des témoins 105, 106, traduit une influence défavorable dangereuse.

2) Protection cathodique des ouvrages 101 et 102 mise hors service successivement :

a) une inversion du sens du courant dans le témoin 105 ou 106 de l'ouvrage 101 ou 102 dont la protection est mise hors service, traduit une influence défavorable dangereuse.

b) une diminution du courant dans un des témoins 105, 106 traduit une influence défavorable. Une analyse plus approfondie des potentiels et des densités de courant devra être effectuée. Le choix de l'action à entreprendre prendra en compte les critères de potentiel et de densité de courant (par exemple: 1000 mV et 50 mA/m$^2$).

Si l'un des ouvrages 101, 102 n'est pas protégé cathodiquement, il ne sera pas influencé si la protection de l'ouvrage adverse ne provoque pas de sorties de courant dans le témoin.

3) Lors des mises hors services successives des ouvrages 101, 102, si un ouvrage est influencé "favorablement", c'est-à-dire avec une augmentation de l'intensité du courant de protection dans son témoin 105 ou 106, des mesures complémentaires devront alors être effectuées pour déterminer l'endroit des sorties de courant de l'ouvrage influencé.

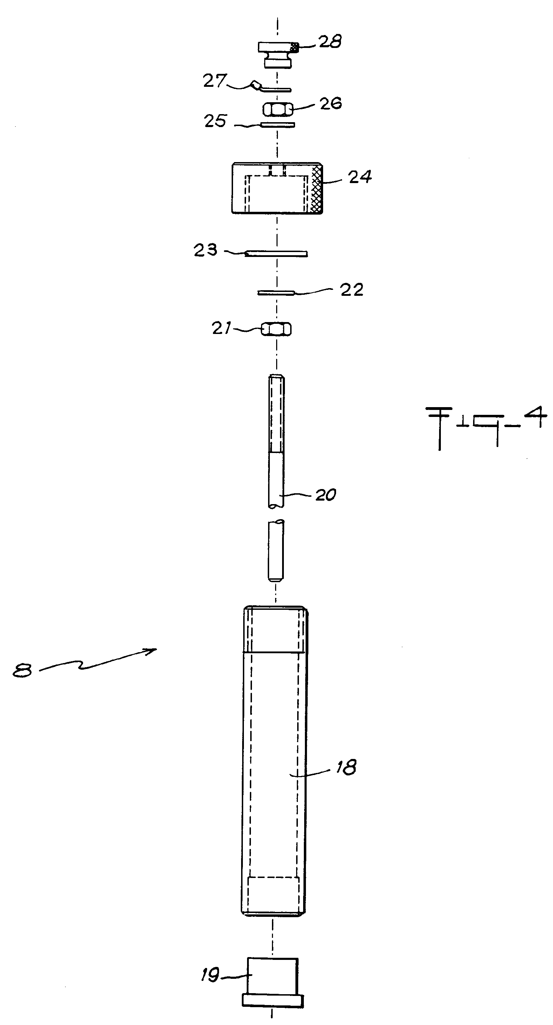

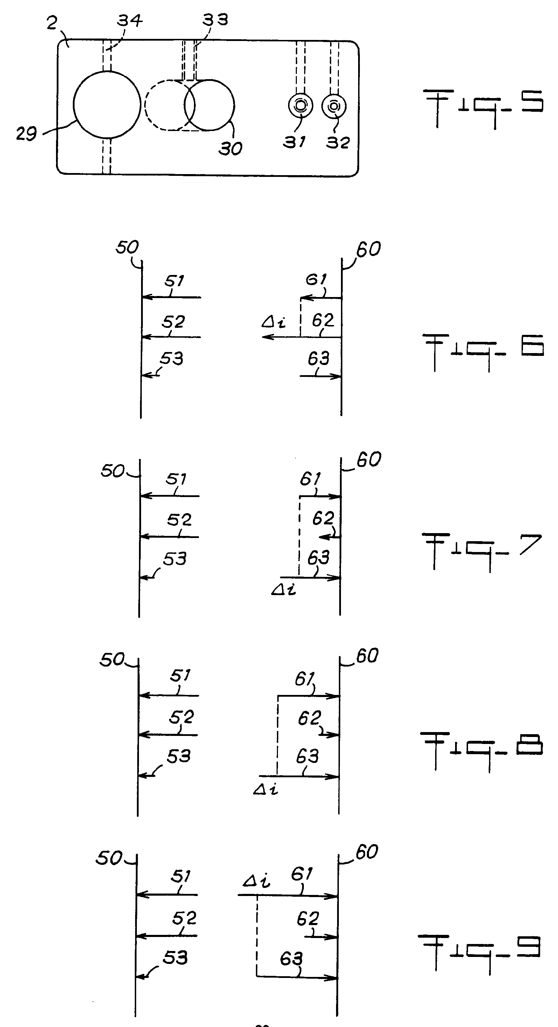

Les graphiques des figures 6 à 9 représentent différents cas possibles d'interactions entre une structure 50 qui constitue un ouvrage "influençant", c'est-à-dire à partir duquel s'exerce une influence, et une structure 60 qui constitue un ouvrage "influencé", c'est-à-dire un ouvrage qui subit une influence. Chacune des structures 50, 60 est représentée par un trait vertical et des vecteurs 51 à 53, 61 à 63 illustrent, selon que leur flèche est orientée vers le trait vertical ou éloignée du trait vertical, des courants qui entrent dans la structure ou des courants qui sortent de celle-ci, l'intensité des courants étant elle-même symbolisée par la longueur des vecteurs.

Pour chacune des figures 6 à 9, les vecteurs 51 à 53 et 61 à 63 sont déterminés en mettant en oeuvre le procédé selon l'invention, c'est-à-dire en mesurant simultanément les potentiels et les intensités du courant de polarisation dans les éprouvettes témoins 105, 106 associées aux structures 101, 102 symbolisées par les traits 50 et 60.

Les vecteurs 51 et 61 représentent les entrées ou sorties de courant respectivement sur les ouvrages 101, 102 alors que tous les générateurs de courant continu associés aux structures 101, 102 sont en service.

Les vecteurs 52 et 62 représentent les entrées ou sorties de courant respectivement sur les ouvrages 101, 102 alors que seuls le ou les générateurs de courant continu associés à la première structure 101 sont en service.

Les vecteurs 53 et 63 représentent les entrées ou sorties de courant respectivement sur les ouvrages 101, 102 alors que seuls le ou les générateurs de courant continu associés à la deuxième structure 102 sont en service.

La figure 6 correspond au cas d'une influence défavorable dangereuse exercée par la structure symbolisée par le trait 50 sur la structure symbolisée par le trait 60. En effet, on voit que dans le cas où la source de courant continu associée à la structure 60 est en service ou hors service, les vecteurs 61 et 62 indiquent des sorties de courant. Le vecteur 63 indique des entrées de courant lorsque la source de courant continu associée à la structure 50 est hors service.

La figure 7 correspond au cas d'une influence défavorable dommageable exercée par la structure 50 sur la structure 60. Dans le cas où la source de courant continu associée à la structure 60 est hors service, le vecteur 62 des courants circulant dans la structure 60 est orienté d'une manière qui représente une sortie de courant. En revanche, le vecteur 63 indique des entrées de courant lorsque la source de courant continu associée à la structure 50 est hors service. Le vecteur 61 indique des entrées de courant qui correspondent à la somme algébrique des vecteurs 62 et 63 lorsque les sources de courant continu des structures 50 et 60 sont en service.

La figure 8 correspond au cas d'une influence défavorable non dommageable exercée par la structure 50 sur la structure 60. En effet, et sous réserve que les critères habituels relatifs aux potentiels et aux densités de courant soient respectés, on constate que dans tous les cas de figure les courants 61, 62, 63 se présentent sous forme de courants entrants pour la structure 60, même si l'intensité de ces courants est minimale dans le cas où la source de courant continu associée à la structure 60 est hors service (vecteur 62) et si l'intensité des courants entrants est maximale dans le cas où la source de courant continu associée à la structure 50 est hors service (vecteur 63).

La figure 9 correspond au cas d'une influence favorable exercée par la structure 50 sur la structure 60. En effet, comme dans le cas de la figure 8, tous les courants 61, 62, 63 se présentent sous la forme de courants entrants pour la structure 60, mais sur la figure 9, c'est le vecteur 61, correspondant au cas où toutes les sources de courant continu associées aux structures 50, 60 sont en service, qui représente l'intensité maximale. Le vecteur 62, correspondant au cas où la source de courant associée à la structure 60 est hors service représente l'intensité minimale. Dans le cas de la figure 9, il convient alors de rechercher les zones de sortie de courant sur la structure 60.

On décrira maintenant en référence à la figure 2 un exemple de circuits électroniques permettant de réaliser un dispositif automatisé de mesure d'influence selon l'invention.

Sur la figure 2, les structures métalliques 101, 102, les éprouvettes témoins 105, 106 et les électrodes de référence 107, 108 sont représentées de façon symbolique pour montrer leurs différentes liaisons électriques avec les circuits du dispositif de mesure par l'intermédiaire des relais 119, 120 qui constituent les inverseurs 109, 110 et les interrupteurs 111, 112. Des résistances 121, 122 sont connectées en série avec les contacts des interrupteurs 111, 112 respectivement et constituent des shunts pour servir à la mesure de l'intensité des courants de polarisation circulant entre le témoin 105 et la structure 101, respectivement entre le témoin 106 et la structure 102.

Un échantillonneur-bloqueur 123 comportant quatre voies différentielles isolées 124 à 127 permet de faire une mesure simultanée sur les quatre voies de mesure constituées par les voies de mesure de courant 126, 127 (prises de signal aux bornes des shunts 121, 122) et les voies de mesure de tension 124, 125 (prises de signal de tension différentielle entre les contacts mobiles des inverseurs 109, resp. 110 pouvant être connectés sélectivement aux structures 101 resp. 102 ou aux éprouvettes témoins 105 resp. 106, et les électrodes de référence 107 resp. 108). L'échantillonneur-bloqueur 123 est constitué par un relais ayant huit contacts de travail et qui est muni dans chaque voie 124 à 127 de condensateurs de sortie 128 à 131 pour mémoriser les valeurs mesurées.

Les signaux issus de l'échantillonneur-bloqueur 123 sont dirigés vers un multiplexeur 132 qui comprend quatre couples d'interrupteurs électroniques 133 à 136 correspondant aux quatre voies de mesure et commandés de façon sélective à partir d'un circuit de commande 146 pour ne laisser passer qu'un seul signal différentiel à la fois en isolant complètement les autres signaux.

Selon le type de mesures à effectuer (tension pour les voies de mesure 124, 128, 133 et 125, 129, 134 intensité pour les voies de mesure 126, 130, 135 et 127, 131, 136) les signaux sont dirigés soit vers un amplificateur en tension 137, soit vers un amplificateur en courant 140.

Un second multiplexeur 141 sélectionne alors une voie tension ou une voie courant et dirige le signal vers un filtre passe-bas 142 destiné à supprimer les parasites. La sortie du filtre 142 est reliée à un convertisseur analogique-numérique 143 qui transmet la valeur mesurée à un microprocesseur 144. Le microprocesseur 144 est relié par un bus d'adresses et de données à des mémoires 145 comprenant une mémoire programme 145a et une mémoire de travail 145b pour stocker les données. Le microprocesseur 144 contrôle le déroulement des mesures en liaison avec une horloge temps réel 147 pour le cadencement des différentes opérations, et le circuit 146 de contrôle et de séquencement des mesures qui comprend entre autres un décodeur d'entrées sorties et une interface utilisateur reliée à un clavier 148 de commande pour l'introduction des paramètres et l'indication par l'opérateur des phases de mesures à effectuer. Un afficheur 149, qui peut être par exemple un afficheur à cristaux liquides de quatre lignes de vingt quatre caractères est relié au circuit 146 pour afficher les résultats des mesures et indiquer l'opération en cours. Une interface 150 peut en outre être connectée au circuit de commande 146 pour permettre de restituer l'ensemble des résultats sur une imprimante.

Pour la mesure simultanée de quatre valeurs (deux valeurs de tension et deux valeurs d'intensité) permettant de mettre en oeuvre le procédé selon l'invention, le dispositif automatique de la figure 2 envoie par l'intermédiaire du circuit de commande 146 des impulsions de commande aux relais 119, 120 et une impulsion de commande sur l'entrée ACQ de l'échantillonneur-bloqueur 123 afin de réaliser simultanément des mesures sur toutes les voies. Les valeurs des mesures sont stockées temporairement par la charge des condensateurs 128 à 131. Le circuit de commande 146 peut ensuite par l'intermédiaire des entrées SEL du multiplexeur 132 sélectionner les voies 133 à 136 les unes après les autres pour fournir, après amplification, filtrage et conversion analogique-numérique, des valeurs numériques représentant des première et seconde tensions et des première et seconde intensités de courant. On notera qu'avec le dispositif de la figure 2, bien qu'un seul convertisseur analogique-numérique 143 soit utilisé, les mesures peuvent bien être réellement simultanées.

On décrira maintenant de façon plus précise en référence aux figures 3 à 5 un exemple de capteur particulièrement bien adapté à la mise en oeuvre du procédé selon l'invention et qui assure les fonctions des capteurs référencés 117, 118 sur la figure 1.

Le capteur des figures 3 à 5 regroupe sur un support isolant commun 2 d'une part une éprouvette témoin 1 et d'autre part une électrode de référence 8 destinées à être mises en place à partir de la surface du sol à peu près au droit d'une structure métallique enterrée susceptible de donner lieu à des interactions avec une structure métallique enterrée voisine.

Le support 2 est en forme de plaque (fig 5) et peut être réalisée en une matière plastique telle que du PVC. La plaque support 2 est destinée à venir reposer sur le sol par sa face inférieure. La plaque 2 comporte un premier trou débouchant 29 dans lequel est engagé le corps isolant 3 formant poignée de l'éprouvette témoin 1. Un orifice 30, dont l'axe est incliné par rapport à la verticale pour venir converger vers l'axe de l'éprouvette témoin 1 sous la plaque 2, est prévu pour le passage de l'électrode de référence 8. Deux autres perçages 31, 32 sont effectués dans la plaque 2 pour recevoir des fiches femelles 6, 7 de connexion reliées par des fils de liaison 12, 13 respectivement à une fiche mâle 6a de connexion avec la tête 5 de l'éprouvette témoin 1 et à une cosse 27 de connexion à l'électrode de référence 8 (fig 3). Un connecteur 4 en matière plastique telle que du PVC, muni de deux broches mâles de sections différentes prévues pour s'adapter dans les broches femelles 6, 7 assure par les fils 14 et 15 les liaisons électriques entre l'éprouvette témoin 1 et l'électrode de référence 8 d'une part, et les circuits de mesure tels que les éléments 109, 111, 113, 115 ou 110, 112, 114, 116 de la figure 1 ou les éléments 119 à 150 de la figure 2.

L'éprouvette témoin 1 de la figure 3 présente la forme d'un piquet avec une tête métallique 5 engagée sur une tige métallique centrale 35 terminée par une pointe 16 à sa partie inférieure. La partie de la tige centrale 35 qui émerge du corps 3 de maintien dans le support 2 est polie et présente une surface calibrée, qui peut être par exemple de l'ordre de 100 cm$^2$. Le corps 3 et la tige 35 sont rendus solidaires l'un de l'autre par des goupilles 10, 11. La partie inférieure 17 du corps 3 qui est en saillie sous la plaque 2 sur une faible distance présente une forme tronconique pour s'engager dans la partie superficielle du sol et permettre à l'électrode de référence 8 de venir par son extrémité inférieure 19, qui forme un bouchon pouvant être en bois, se placer à proximité immédiate de la tige enterrée 35 dans la partie superficielle du sous-sol. L'électrode 8 comprend un corps 18, par exemple en PVC, maintenu par une vis 9 dans le support 2, et un barreau métallique central 20, qui est en cuivre dans le cas d'une électrode du type Cu/CuSO$_4$. La figure 4 montre le bouchon supérieur 24 de l'électrode 8, qui est muni d'un moletage sur sa face externe et d'un filetage sur sa face interne. La référence 21 désigne un écrou interne de maintien du barreau central 20 de l'électrode, la référence 22 une rondelle et la référence 23 une rondelle d'étanchéité. L'extrémité supérieure du barreau 20 qui émerge du bouchon supérieur 24 coopère elle-même avec une rondelle 25, un premier écrou 26, une cosse de connexion électrique 27 et un deuxième écrou supérieur 28 muni d'un moletage.

TABLEAU 1

Mesures de l'état initial des ouvrages
(protection cathodique des ouvrages A et B en service)

| MESURES | OUVRAGE "A" | OUVRAGE "B" |
|---|---|---|
| (1) Potentiel conduite/sol témoins non raccordés (mV) | | |
| (2) Potentiel témoin/sol conduite non raccordée (mV) | | |
| (3) Potentiel conduite/sol témoins raccordés < 3 secondes (mV) | | |
| Intensité du courant de protection dans les témoins non polarisés (mA) | | |
| (4) Potentiel conduite/sol témoins raccordés (temps de polarisation > à 30 minutes) (mV) | | |
| Intensités des témoins après polarisation (temps > à 30 minutes) (mA) | | |

9

# TABLEAU II

## Mesures d'interaction selon la procédure proposée

| SITUATION DES PROTECTIONS | OUVRAGE "A" | | | | OUVRAGE "B" | | | |
|---|---|---|---|---|---|---|---|---|
| | Et (mV) | ΔEt (mV) | It (mA) | ΔIt (mA) | Et (mV) | ΔEt (mV) | It (mA) | ΔIt (mA) |
| a) Ouvrage A en service / Ouvrage B en service | | ✕ | | ✕ | | ✕ | | ✕ |
| b) Ouvrage A en service / Ouvrage B hors service | | | | | | | | |
| c) Ouvrage A hors service / Ouvrage B en service | | | | | | | | |

Nota : Et = potentiel témoin polarisé raccordé en permanence à la conduite.

It = intensité du courant de polarisation du témoin.

EP 0 435 761 B1

**Revendications**

1. Dispositif de détermination des interactions dues à des courants continus sur des première et deuxième structures métalliques enterrées voisines (101, 102), dont l'une au moins est reliée à un générateur de courant continu, tel qu'un dispositif de protection cathodique,
   caractérisé en ce qu'il comprend:

   a) des première et deuxième éprouvettes témoins calibrées métalliques (105, 106) réalisées en des matériaux analogues à ceux dans lesquels sont réalisées respectivement les première et deuxième structures (101, 102), lesdites première et deuxième éprouvettes témoins (105, 106) étant placées en contact avec le sol approximativement au-dessus respectivement desdites première et deuxième structures enterrées (101, 102) de telle manière que la distance $l'$ entre les première et deuxième éprouvettes témoins (105, 106) soit sensiblement identique à la distance $l$ entre lesdites première et deuxième structures (101, 102),
   b) des première et deuxième électrodes de référence (107, 108) disposées à proximité immédiate respectivement desdites première et deuxième éprouvettes témoins (105, 106),
   c) des première et deuxième prises de potentiel (103, 104) isolées par rapport au sol et reliées respectivement auxdites première et deuxième structures métalliques (101, 102),
   d) un premier interrupteur simple (111) connecté entre la première prise de potentiel isolée (103) et un premier dispositif de mesure de courant (115; 121) lui-même relié à la première éprouvette témoin (105), et un deuxième interrupteur simple (112) connecté entre la deuxième prise de potentiel isolée (104) et un deuxième dispositif de mesure de courant (116; 122) lui-même relié à la deuxième éprouvette témoin (106),
   e) un premier inverseur simple (109) pour connecter une borne d'un premier dispositif de mesure de tension (113), dont l'autre borne est connectée à la première électrode de référence (107), sélectivement soit à ladite première prise de potentiel, soit à ladite première éprouvette témoin (105) et un deuxième inverseur simple (110) pour connecter une borne d'un deuxième dispositif de mesure de tension (114), dont l'autre borne est connectée à la deuxième électrode de référence (108), sélectivement soit à ladite deuxième prise de potentiel (104), soit à ladite deuxième éprouvette témoin (106).

2. Dispositif selon la revendication 1, caractérisé en ce que la distance d entre chacune des première et deuxième structures enterrées (101, 102) et l'éprouvette témoin correspondante (105, 106) est très inférieure aux distances entre les sources de courant continu et les structures enterrées (101, 102).

3. Dispositif selon la revendication 1 ou la revendication 2, caractérisé en ce que les première et deuxième électrodes de référence (107, 108) sont du type $Cu/CuSO_4$ et présentent un diamètre inférieur ou égal à environ 20 mm.

4. Dispositif selon l'une quelconque des revendications 1 à 3, caractérisé en ce que les première et deuxième éprouvettes témoins calibrées (105, 106) présentent une surface en contact avec le sol de l'ordre de 100 $cm^2$.

5. Dispositif selon l'une quelconque des revendications 1 à 4, caractérisé en ce que les premier et deuxième dispositifs de mesure de courant (115, 116) comprennent des premier et deuxième shunts (121, 122).

6. Dispositif selon l'une quelconque des revendications 1 à 5, caractérisé en ce qu'il comprend en outre un échantillonneur-bloqueur (123) comportant quatre voies différentielles (124 à 127) isolées pour effectuer une mesure simultanée à l'aide desdits premier et deuxième dispositifs de mesure de courant (115, 116; 121, 122) et à l'aide desdits premier et deuxième dispositifs de mesure de tension (113, 114), un premier multiplexeur (132) placé en sortie dudit échantillonneur-bloqueur (123) pour ne laisser passer qu'un seul signal différentiel à la fois, en isolant complètement les signaux des autres voies, un amplificateur en tension (137) pour recevoir les signaux issus des voies différentielles de mesure de tension (124, 125), un amplificateur en courant (140) pour recevoir les signaux issus des voies différentielles de mesure de courant (126, 127), un second multiplexeur (141) pour sélectionner une voie de mesure de tension (124, 125) comprenant l'amplificateur en tension (137) ou une voie de mesure en courant (126, 127) comprenant l'amplificateur en courant (140), un filtre passe-bas (142) connecté en sortie du second multiplexeur (141), un convertisseur analogique-numérique (143) connecté en sortie du filtre passe-bas (142), un micro-processeur (144) associé à une mémoire de programme (145a) et une mémoire de travail (145b) pour le stockage de données, ainsi qu'à un dispositif (146) de contrôle et de séquencement des mesures, à une horloge temps réel (147) et à un décodeur d'entrées-sorties (146).

7. Dispositif selon la revendication 6, caractérisé en ce que l'échantillonneur-bloqueur (123) comprend un relais à au moins huit contacts de travail et au moins quatre condensateurs de sortie (128 à 131) pour mémoriser les valeurs de tension différentielle appliquées sur les quatre voies de mesure (124 à 127).

8. Dispositif selon l'une quelconque des revendications 1 à 7, caractérisé en ce que la première éprouvette témoin (105) calibrée et la première électrode de référence (107) sont montées sur un support commun (2).

9. Dispositif selon l'une quelconque des revendications 1 à 8, caractérisé en ce que la deuxième éprouvette témoin (106) calibrée et la deuxième électrode de référence (108) sont montées sur un support commun (2).

10. Dispositif selon l'une quelconque des revendications 1 à 9, caractérisé en ce que chacune des première et deuxième éprouvettes témoins (105, 106) comprend une tige (35) ancrée sensiblement verticalement dans le sol à partir de la surface du sol, et en ce que chacune des première et deuxième électrodes de référence (107, 108) est inclinée d'un angle compris entre environ 20° et 50° par rapport à la verticale en présentant une extrémité inférieure (19) située au voisinage de la surface du sol à proximité immédiate de ladite tige (35) ancrée dans le sol.

11. Procédé de détermination des interactions dues à des courants continus sur des première et deuxième structures métalliques (101, 102) enterrées voisines dont l'une au moins est reliée à un générateur de courant continu tel qu'un dispositif de protection cathodique,
caractérisé en ce qu'il consiste à placer au voisinage des première et deuxième structures métalliques enterrées (101, 102) des première et deuxième éprouvettes métalliques témoins calibrées (105, 106) réalisées en des matériaux analogues à ceux des première et deuxième structures (101, 102), les première et deuxième éprouvettes (105, 106) étant écartées l'une de l'autre d'une distance $l'$ égale à la distance $l$ séparant les première et deuxième structures (101, 102), à placer à proximité immédiate des première et deuxième éprouvettes métalliques témoins (105, 106) des première et deuxième électrodes de référence (107, 108) et à mesurer simultanément d'une part les potentiels des première et deuxième éprouvettes témoins (105, 106) par rapport aux première et deuxième électrodes de référence (107, 108) et d'autre part les intensités des courants parcourant les première et deuxième éprouvettes témoins calibrées (105, 106) lorsque celles-ci sont reliées électriquement respectivement aux première et deuxième structures (101, 102).

12. Procédé selon la revendication 11, caractérisé en ce que l'on procède aux mesures des potentiels et des intensités des première et deuxième éprouvettes témoins (105, 106) successivement dans les conditions suivantes:
a) tous les générateurs de courant continu associés aux première et deuxième structures (101, 102) sont en service,
b) seuls les générateurs de courant continu associés à la première structure (101) sont en service,
c) seuls les générateurs de courant continu associés le cas échéant à la deuxième structure (102) sont en service.

13. Procédé selon la revendication 11 ou la revendication 12, caractérisé en ce qu'il comprend en outre une étape consistant à effectuer des mesures instantanées et simultanées des potentiels des première et deuxième structures enterrées (101, 102) et des intensités des courants parcourant les première et deuxième éprouvettes témoins (105, 106) raccordées, sans être polarisées, respectivement auxdites première et deuxième structures (101, 102) pendant une durée inférieure ou égale à environ trois secondes.

14. Procédé selon l'une quelconque des revendications 11 à 13, caractérisé en ce qu'il comprend en outre une étape consistant à effectuer des mesures instantanées et simultanées des potentiels des première et deuxième structures enterrées (101, 102) et des intensités des courants parcourant les première et deuxième éprouvettes témoins (105, 106) au moins trente minutes après un raccordement électrique ininterrompu des première et deuxième éprouvettes témoins (105, 106) respectivement aux première et deuxième structures (101, 102).

**15.** Procédé selon l'une quelconque des revendications 11 à 14, caractérisé en ce qu'il comprend en outre une étape consistant à mesurer les potentiels des première et deuxième structures enterrées (101, 102) par rapport respectivement aux première et deuxième électrodes de référence (107, 108), les première et deuxième éprouvettes témoins (105, 106) étant déconnectées et tous les générateurs de courant continu associés aux première et deuxième structures (101, 102) étant en service.

**16.** Procédé selon l'une quelconque des revendications 11 à 15, caractérisé en ce qu'il comprend en outre une étape consistant à mesurer les potentiels naturels des première et deuxième éprouvettes témoins (105, 106) par rapport respectivement aux première et deuxième électrodes de référence (107, 108) non reliées électriquement aux première et deuxième structures (101, 102) au moins quinze minutes après la mise en place des première et deuxième éprouvettes témoins (105, 106).

**17.** Procédé selon la revendication 12, caractérisé en ce que lors de la conduite desdites mesures des potentiels et des intensités des première et deuxième éprouvettes témoins (105, 106), on procède aux mesures impliquant des mises hors service des générateurs de courant continu pendant des durées inférieures à environ trois secondes.

**18.** Capteur pour dispositif de détermination des interactions dues à des courants continus sur des structures métalliques enterrées voisines (101, 102) dont l'une au moins est reliée à un générateur de courant continu, tel qu'un dispositif de protection cathodique,
caractérisé en ce qu'il comprend un support (2) en forme de plaque destiné à être placé sur le sol au voisinage d'une structure enterrée (101, 102), une éprouvette témoin (1) comprenant une tige métallique verticale (35) présentant une extrémité libre inférieure (16) en forme de pointe et un corps (3) qui entoure une partie supérieure de la tige (35) et est engagée dans une première ouverture (29) du support (2) en forme de plaque, une électrode de référence (8) introduite de façon inclinée dans une deuxième ouverture (30) du support (2) en formant un angle compris entre environ 20 et 50° par rapport à la verticale, de façon à présenter une extrémité inférieure (19) engagée dans le sol, qui émerge sous la plaque de support (2) au voisinage de la tige verticale (35) de l'éprouvette témoin (1), et des moyens de connexion (6, 6a; 7) pour connecter les extrémités supérieures de l'éprouvette témoin (1) et de l'électrode de référence (8) à un dispositif extérieur de mesure de tension ou d'intensité de courant.

**19.** Capteur selon la revendication 18, caractérisé en ce que la tige métallique (35) est engagée par son extrémité libre supérieure dans une tête métallique (5) qui forme une tête de piquet et comprend des moyens de connexion électrique (6a), et en ce que le corps (3) en forme de manchon et le support (2) en forme de plaque sont réalisés en une matière plastique telle que du PVC.

**Patentansprüche**

**1.** Vorrichtung zur Bestimmung gleichstrombedingter Wechselwirkungen an einer ersten und einer zweiten unterirdischen metallischen Struktur (101, 102), von denen wenigstens eine mit einem Gleichstromgenerator wie einer kathodischen Korrosionsschutzvorrichtung verbunden ist,
gekennzeichnet durch:
a) einen ersten und einen zweiten geeichten metallischen Probekörper (105, 106), gefertigt aus Materialien entsprechend denen, aus denen jeweils die erste bzw. zweite Struktur (101, 102) gefertigt sind, und die mit dem Boden ungefähr oberhalb der ersten bzw. zweiten unterirdischen Struktur (101, 102) derart in Kontakt gebracht sind, daß der Abstand l' zwischen erstem und zweitem Probekörper (105, 106) im wesentlichen gleich dem Abstand l zwischen erster und zweiter Struktur (101, 102) ist,
b) eine erste und eine zweite Bezugselektrode (107, 108), die in unmittelbarer Nähe des ersten bzw. zweiten Probekörpers (105, 106) angeordnet sind,
c) einen ersten und einen zweiten Potentialanschluß (103, 104), die gegen den Boden isoliert und jeweils mit der ersten bzw. zweiten metallischen Struktur (101, 102) verbunden sind,
d) einen ersten einfachen Unterbrecher (111), der zwischen dem ersten isolierten Potentialanschluß (103) und einer ersten Strommeßvorrichtung (115; 121) angeschlossen ist, die ihrerseits mit dem ersten Probekörper (105) verbunden ist, und einen zweiten einfachen Unterbrecher (112), der zwischen dem zweiten isolierten Potentialanschluß (104) und einer zweiten Strommeßvorrichtung (116, 122) angeschlossen ist, die ihrerseits mit dem zweiten Probekörper (106) verbunden ist,
e) einen ersten einfachen Umschalter (109), zum Anschließen einer Klemme einer ersten Spannungsmeßvorrichtung (113), deren andere Klemme an die erste Bezugselektrode (107) angeschlossen ist, wahlweise an den ersten Potentialanschluß oder den ersten Probekörper (105), und einen zweiten einfachen Umschalter (110), zum Anschließen einer Klemme einer zweiten Spannungsmeßvorrichtung (114), deren andere Klemme an die zweite Bezugselektrode (108) angeschlossen ist, wahlweise an den zweiten Potentialanschluß (104) oder den zweiten Probekörper (106).

2. Vorrichtung nach Anspruch 1, dadurch gekennzeichnet, daß der Abstand d zwischen der ersten bzw. zweiten unterirdischen Struktur (101, 102) und dem entsprechenden Probekörper (105, 106) wesentlich kleiner als die Abstände zwischen den Gleichstromquellen und den unterirdischen Strukturen (101, 102) ist.

3. Vorrichtung nach Anspruch 1 oder 2, dadurch gekennzeichnet, daß die erste und zweite Bezugselektrode (107, 108) vom Cu/CuSO$_4$-Typ sind und einen Durchmesser von ca. 20 mm oder weniger aufweisen.

4. Vorrichtung nach einem der Ansprüche 1 bis 3, dadurch gekennzeichnet, daß der erste und der zweite geeichte Probekörper (105, 106) eine Oberfläche in Kontakt mit dem Boden in der Größenordnung von 100 cm$^2$ haben.

5. Vorrichtung nach einem der Ansprüche 1 bis 4, dadurch gekennzeichnet, daß die erste und die zweite Strommeßvorrichtung (115, 116) jeweils einen ersten bzw. zweiten Nebenschlußwiderstand (121, 122) aufweisen.

6. Vorrichtung nach einem der Ansprüche 1 bis 5, gekennzeichnet durch ein Abtasthalteglied (123) mit vier isolierten differentiellen Kanälen (124 bis 127) zur Durchführung einer gleichzeitigen Messung mit Hilfe der ersten und zweiten Strommeßvorrichtung (115, 116; 121, 122) und der ersten und zweiten Spannungsmeßvorrichtung (113, 114), einen ersten Multiplexer (132), der am Ausgang des Abtasthalteglieds (123) angeordnet ist, um nur jeweils ein differentielles Signal gleichzeitig durchzulassen, unter vollständiger Isolierung der Signale der anderen Kanäle, einen Spannungsverstärker (137), zum Empfang der von den differentiellen Spannungsmeßkanälen (124, 125) ausgegebenen Signale, einen Stromverstärker (140) zum Empfang der von den differentiellen Strommeßkanälen (126, 127) ausgegebenen Signale, einen zweiten Multiplexer (141) zur Auswahl eines Spannungsmeßkanals (124, 125) einschließlich des Spannungsverstärkers (137) oder eines Strommeßkanals (126, 127) einschließlich des Strommeßverstärkers (140), einen an den Ausgang des zweiten Multiplexers (141) angeschlossenen Tiefpaßfilter (142), einen an den Ausgang des Tiefpaßfilters (142) angeschlossenen Analog-Digital-Wandler (143), einen mit einem Programmspeicher (145a) und einem Arbeitsspeicher (145b) zur Speicherung von Daten verbundenen Mikroprozessor (144), sowie eine Vorrichtung (146) zur Kontrolle und Abfolgesteuerung der Messungen, mit einer Echtzeituhr (147) und einem Ein-/Ausgabedecoder (146).

7. Vorrichtung nach Anspruch 6, dadurch gekennzeichnet, daß das Abtasthalteglied (123) ein Relais mit wenigstens acht Arbeitskontakten und wenigstens vier Ausgangskondensatoren (128 bis 131) zur Speicherung der an den vier Meßkanälen (124 bis 127) anliegenden differentiellen Spannungswerte umfaßt.

8. Vorrichtung nach einem der Ansprüche 1 bis 7, dadurch gekennzeichnet, daß der erste geeichte Probekörper (105) und die erste Bezugselektrode (107) auf einem gemeinsamen Träger (2) montiert sind.

9. Vorrichtung nach einem der Ansprüche 1 bis 8, dadurch gekennzeichnet, daß der zweite geeichte Probekörper (106) und die zweite Bezugselektrode (108) auf einem gemeinsamen Träger (2) montiert sind.

10. Vorrichtung nach einem der Ansprüche 1 bis 9, dadurch gekennzeichnet, daß erster und zweiter Probekörper (105, 106) jeweils eine ausgehend von der Bodenoberfläche im wesentlichen vertikal im Boden verankerte Stange (35) umfassen, und daß die erste bzw. zweite Bezugselektrode (107, 108) um einen Winkel zwischen ungefähr 20° und 50° gegen die Vertikale geneigt ist und ein in Nähe der Oberfläche des Bodens in unmittelbarer Nähe der im Boden verankerten Stange (35) liegendes unteres Ende aufweist.

11. Verfahren zur Bestimmung gleichstrombedingter Wechselwirkungen an einer ersten und einer zweiten benachbarten unterirdischen Struktur (101, 102), von denen wenigstens eine mit einem Gleichstromgenerator wie einer kathodischen Korrosionsschutzvorrichtung verbunden ist,
gekennzeichnet durch die Anbringung in der Nähe der ersten bzw. zweiten unterirdischen metallischen Struktur (101, 102) eines ersten bzw. zweiten geeichten metallischen Probekörpers (105, 106), gefertigt aus Materialien analog denen der ersten bzw. zweiten Struktur (101, 102), wobei erster und zweiter Probekörper (105, 106) voneinander einen Abstand 1' haben, der gleich dem Abstand I zwischen erster und zweiter Struktur (101, 102) ist,

die Anbringung in unmittelbarer Nähe des ersten bzw. zweiten metallischen Probekörpers (105, 106), einer ersten bzw. zweiten Bezugselektrode (107, 108) und die gleichzeitige Messung einerseits der Potentiale des ersten und zweiten Probekörpers (105, 106) bezüglich der ersten und zweiten Bezugselektrode (107, 108) und andererseits der durch den ersten bzw. zweiten Probekörper (105, 106) fließenden Stromstärken, wenn diese elektrisch mit der ersten bzw. zweiten Struktur (101, 102) verbunden sind.

12. Verfahren nach Anspruch 11, dadurch gekennzeichnet, daß die Messungen der Potentiale und Stromstärken der ersten und zweiten Probekörper (105, 106) nachfolgend unter den folgenden Bedingungen durchgeführt werden:

a) alle der ersten bzw. zweiten Struktur (101, 102) zugeordneten Gleichstromgeneratoren sind in Betrieb,

b) nur die der ersten Struktur (101) zugeordneten Gleichstromgeneratoren sind in Betrieb,

c) nur die ggfs. der zweiten Struktur (102) zugeordneten Gleichstromgeneratoren sind in Betrieb.

13. Verfahren nach Anspruch 11 oder 12, gekennzeichnet durch einen Schritt der gleichzeitigen Kurzzeitmessungen der Potentiale der ersten und zweiten unterirdischen Struktur (101, 102) und der Stromstärken, die den ersten bzw. zweiten Probekörper (105, 106) durchfließen, wenn diese, ohne polarisiert zu sein, jeweils mit der ersten bzw. zweiten Struktur (101, 102) über eine Zeitdauer von 3 s oder weniger verbunden sind.

14. Verfahren nach einem der Ansprüche 11 bis 13, gekennzeichnet durch einen Schritt der gleichzeitigen Kurzzeitmessungen der Potentiale der ersten und zweiten unterirdischen Struktur (101, 102) und der durch den ersten und zweiten Probekörper (105, 106) fließenden Ströme nach einer wenigstens 30-minütigen ununterbrochenen Verbindung des ersten bzw. zweiten Probekörpers (105, 106) mit der ersten bzw. zweiten Struktur (101, 102).

15. Verfahren nach einem der Ansprüche 11 bis 14, gekennzeichnet durch einen Schritt der Messung der Potentiale der ersten bzw. zweiten unterirdischen Struktur (101, 102) bezüglich der ersten bzw. zweiten Bezugselektrode (107, 108), wobei der erste und zweite Probekörper (105, 106) abgetrennt sind und alle der ersten bzw. zweiten Struktur (101, 102) zugeordneten Gleichstromgeneratoren in Betrieb sind.

16. Verfahren nach einem der Ansprüche 11 bis 15, gekennzeichnet durch eine Messung der natürlichen Potentiale des ersten bzw. zweiten Probekörpers (105, 106) bezüglich der ersten bzw. zweiten Bezugselektrode (107, 108), die nicht mit der ersten bzw. zweiten Struktur (101, 102) verbunden ist, mindestens 15 min nach Anbringung des ersten bzw. zweiten Probekörpers (105, 106).

17. Verfahren nach Anspruch 12, dadurch gekennzeichnet, daß bei der Durchführung der Potential- und Stromstärkenmessungen am ersten und zweiten Probekörper (105, 106) Messungen, die die Außerbetriebnahme der Gleichstromgeneratoren erfordern, mit Zeitdauern von weniger als ca. 3 s durchgeführt werden.

18. Meßwertaufnehmer für eine Vorrichtung zur Bestimmung der gleichstrombedingten Wechselwirkungen an unterirdischen benachbarten metallischen Strukturen (101, 102), von denen wenigstens eine mit einem Gleichstromgenerator wie einer kathodischen Korrosionsschutzvorrichtung verbunden ist, gekennzeichnet durch einen plattenförmigen Träger (2) zur Anbringung auf dem Boden in der Nähe einer unterirdischen metallischen Struktur (101, 102), einen Probekörper (1) mit einer vertikalen metallischen Stange (35), die ein freies unteres Ende (16) in Form einer Spitze und einen Körper (3), der einen oberen Bereich der Stange (35) umgibt und in eine erste Öffnung (29) des plattenförmigen Trägers (2) eingeführt ist, aufweist, eine Bezugselektrode (8), die in eine zweite Öffnung (30) des Trägers (2) geneigt, unter Bildung eines Winkels zwischen ca. 20° und 50° gegen die Vertikale derart eingeführt ist, daß sie ein in den Boden eingreifendes unteres Ende (19) aufweist, das unter der Trägerplatte (2) in der Nähe der vertikalen Stange (35) des Probekörpers (1) austritt, und Verbindungsmittel (6, 6a; 7) zur Verbindung der oberen Enden des Probekörpers (1) und der Bezugselektrode (8) mit einer äußeren Spannungs- oder Stromstärkenmeßvorrichtung.

19. Meßwertaufnehmer nach Anspruch 18, dadurch gekennzeichnet, daß die Metallstange (35) mit ihrem frei-

EP 0 435 761 B1

en oberen Ende in einen metallischen Kopf (5) eingreift, der einen Pfahlkopf bildet und elektrische Verbindungsmittel (6a) umfaßt, und daß der hülsenförmige Körper (3) und der plattenförmige Träger (2) aus
einem Kunststoff wie PVC hergestellt sind.

**Claims**

1. Apparatus for determining the interactions due to direct currents on first and second adjacent buried metal
   structures (101, 102) at least one of which is connected to a direct current generator, such as a cathodic
   protection device,
   characterized in that it comprises:
   a) first and second metal calibrated specimen test pieces (105, 106) respectively made from materials
   analogous to those from which the first and second structures (101, 102) are made, said first and second specimen test pieces (105, 106) being placed in contact with the ground approximately over respective ones of said first and second buried structures (101, 102) in such a manner that the distance
   l' between the first and second specimen test pieces (105, 106) is substantially equal to the distance
   l between said first and second structures (101, 102),
   b) first and second reference electrodes (107, 108) disposed in the immediate proximity of respective
   ones of said first and second specimen test pieces (105, 106),
   c) first and second potential take-off points (103, 104) which are isolated relative to ground and which
   are connected to respective ones of said first and second metal structures (101, 102),
   d) a first on/off switch (111) connected between the first isolated potential take-off point (103) and a
   first current measuring device (115; 121) itself connected to the first specimen test piece (105), and a
   second on/off switch (112) connected between the second isolated potential take-off point (104) and
   a second current measuring device (116; 122) itself connected to the second specimen test piece (106),
   e) a first single-pole changeover switch (109) for selectively connecting one terminal of a first voltage
   measuring device (113) whose other terminal is connected to the first reference electrode (107) either
   to said first potential take-off point or else to said first specimen test piece (105), and a second single-
   pole changeover switch (110) for selectively connecting one terminal of a second voltage measuring
   device (114) whose other terminal is connected to the second reference electrode (108) either to said
   second potential take-off point (104), or else to said second specimen test piece (106).

2. Apparatus according to claim 1, characterized in that the distance d between each of the first and second
   buried structures (101, 102) and the corresponding specimen test piece (105, 106) is very much smaller
   than the distances between the DC sources and the buried structures (101, 102).

3. Apparatus according to claim 1 or claim 2, characterized in that the first and second reference electrodes
   (107, 108) are of the $Cu/CuSO_4$ type and the diameter thereof is not greater than about 20 mm.

4. Apparatus according to any one of claims 1 to 3, characterized in that the area in contact with the ground
   of the first and second calibrated specimen test pieces (105, 106) is about 100 cm².

5. Apparatus according to any one of claims 1 to 4, characterized in that the first and second current measuring devices (115, 116) include first and second shunts (121, 122).

6. Apparatus according to any one of claims 1 to 5, characterized in that it further includes a sample-and-
   hold circuit (123) having four isolated differential paths (124 to 127) for enabling simultaneous measurements to be performed using said first and second current measuring devices (115, 116; 121, 122) and
   said first and second voltage measuring devices (113, 114), a first multiplexer (132) being placed at the
   outputs from said sample-and-hold circuit (123) so as to pass only one differential signal at a time, while
   the signals of the other paths are completely isolated, a voltage amplifier (137) for receiving the signals
   from the differential paths for voltage measurements (124, 125), a current amplifier (140) for receiving
   the signals from the differential paths for current measurements (126, 127), a second multiplexer (141)
   for selecting a voltage measurement path (124, 125) including the voltage amplifier (137) or a current
   measurement path (126, 127) including the current amplifier (140), a lowpass filter (142) connected to
   the output of the second multiplexer (141), an analog-to-digital converter (143) connected to the output
   of the lowpass filter (142), a microprocessor (144) associated with a program memory (145a) and a working memory (145b) for storing data, together with a measurement sequencing and monitoring device

16

EP 0 435 761 B1

(146), a real time clock (147), and an input/output decoder (146).

7. Apparatus according to claim 6, characterized in that the sample-and-hold circuit (123) comprises a relay having at least eight working contacts and at least four output capacitors (128 to 131) for storing differential voltage values applied to the four measurement paths (124 to 127).

8. Apparatus according to any one of claims 1 to 7, characterized in that the first calibrated specimen test piece (105) and the first reference electrode (107) are mounted on a common support (2).

9. Apparatus according to any one of claims 1 to 8, characterized in that the second calibrated specimen test piece (106) and the second reference electrode (108) are mounted on a common support (2).

10. Apparatus according to any one of claims 1 to 9, characterized in that each of the first and second specimen test pieces (105, 106) comprises a rod (35) anchored substantially vertically in the ground on the surface of the ground, and in that each of the first and second reference electrodes (107, 108) is inclined at an angle lying in the range about 20° to about 50° relative to the vertical, having a bottom end (19) situated in the vicinity of the surface of the ground in the immediate proximity of said rod (35) anchored in the ground.

11. Method of determining interactions due to direct currents on first and second adjacent buried metal structures (101, 102), at least one of which is connected to a direct current generator such as a cathodic protection device,
characterized in that it consists in placing first and second calibrated specimen metal test pieces (105, 106) in the vicinity of the first and second buried metal structures (101, 102), the test pieces being made from materials analogous to those of the first and second structures (101, 102), the first and second test pieces (105, 106) being spaced apart by a distance $\underline{l'}$ equal to the distance $\underline{l}$ between the first and second structures (101, 102), in placing first and second reference electrodes (107, 108) in the immediate proximity of the first and second specimen metal test pieces (105, 106), and in simultaneously measuring both the potentials of the first and second specimen test pieces (105, 106) relative to the first and second reference electrodes (107, 108) and the intensities of the currents flowing through the first and second calibrated specimen test pieces (105, 106) when the test pieces are electrically connected to the first and second structures (101, 102) respectively.

12. Method according to claim 11, characterized in that the potentials and the intensities of the first and second specimen test pieces (105, 106) are measured successively under the following conditions:
a) all of the DC generators associated with the first and second structures (101, 102) are in operation,
b) only the DC generators associated with the first structure (101) are in operation,
c) only the DC generators associated with the second structure (102), if any, are in operation.

13. Method according to claim 11 or claim 12, characterized in that it further includes a step consisting in performing instantaneous and simultaneous measurements of the potentials of the first and second buried structures (101, 102) and of the intensities of the currents flowing through the first and second specimen test pieces (105, 106) which are connected without being polarized respectively to said first and second structures (101, 102) for a period of time not greater than about 3 seconds.

14. Method according to any one of claims 11 to 13, characterized in that it further includes a step consisting in performing instantaneous and simultaneous measurements of the potentials of the first and second buried structures (101, 102) and of the intensities of the currents flowing through the first and second specimen test pieces (105, 106) at least 30 minutes after an uninterrupted electrical connection between the first and second specimen test pieces (105, 106) and respective ones of the first and second structures (101, 102).

15. Method according to any one of claims 11 to 14, characterized in that it further includes a step consisting in measuring the potentials of the first and second buried structures (101, 102) relative to the first and second reference electrodes (107, 108) respectively, the first and second specimen test pieces (105, 106) being disconnected and all DC generators associated with the first and second structures (101, 102) being in operation.

16. Method according to any one of claims 11 to 15, characterized in that it further includes a step consisting

17

in measuring the natural potentials of the first and second specimen test pieces (105, 106) relative to the first and second reference electrodes (107, 108) respectively while not electrically connected to the first and second structures (101, 102) and not less than 15 minutes after the first and second specimen test pieces (105, 106) have been put into place.

17. Method according to claim 12, characterized in that while performing said potential and intensity measurements on the first and second specimen test pieces (105, 106), measurements are performed requiring DC generators to be taken out of operation for periods of time shorter than about 3 seconds.

18. Probe for apparatus for determining interactions due to direct currents on adjacent buried metal structures (101, 102) at least one of which is connected to a direct current generator such as a cathodic protection device,
characterized in that it comprises a support (2) in the form of a plate for placing on the ground in the vicinity of a buried structure (101, 102), a specimen test piece (1) comprising a vertical metal rod (35) having a free bottom end (16) in the form of a point and a body (3) which surrounds a top portion of the rod (35) and which is engaged in a first opening (29) through the plate-shaped support (21), a reference electrode (8) introduced in an inclined fashion through a second opening (30) in the support (2) so as to form an angle lying in the range about 20° to about 50° relative to the vertical, thereby presenting a bottom end (19) engaged in the ground and emerging beneath the support plate (2) in the vicinity of the vertical rod (35) of the specimen test piece (1), and connection means (6, 6a; 7) for connecting the top ends of the specimen test piece (1) and of the reference electrode (8) to an external device for measuring voltage or current intensity.

19. Probe according to claim 18, characterized in that the metal rod (35) is engaged at its free top end in a metal head (5) in the form of a spike head which includes electrical connection means (6a), and in that the body (3) in the form of a sleeve and the support (2) in the form of a plate are made of a plastic material such as PVC.

Fig-1

Fig-2

TENSION 1
TENSION 2
COURANT 1
COURANT 2
ÉCHANTILLONNAGE
CANALISATION/TÉMOIN
MESURE COURANT TÉMOIN

BUS ADRESSES/DONNÉES

BUS ADRESSES/DONNÉES

EP 0 435 761 B1

EP 0 435 761 B1

Fig. 3

21

28

27

26

25

24

23

22

21

Fig-4

20

8

18

19

22

Fig-5

Fig-6

Fig-7

Fig-8

Fig-9